# EUROPEAN PATENT APPLICATION

(11) **EP 4 672 708 A1**
(43) Date of publication of application: **31.12.2025**
(21) Application number: 23930136.9
(22) Date of filing: 26.12.2023
(51) Int. Cl.: H04L 47/10

(54) **FLOW CONTROL METHOD, APPARATUS AND SYSTEM**

(30) Priority: 29.03.2023 CN 202310356421
(71) Applicant: Huawei Technologies Co., Ltd., Shenzhen, Guangdong 518129 (CN)
(72) Inventor: LIU, Xiao, Shenzhen, Guangdong 518129 (CN); LI, Ying, Shenzhen, Guangdong 518129 (CN); FANG, Ping, Shenzhen, Guangdong 518129 (CN)
(74) Representative: Huawei European IPR
(86) International application number: PCT/CN2023/141997
(87) International publication number: WO 2024/198573

(57) **Abstract**

A flow control method and apparatus, and a system are provided, and relate to the field of communication technologies, to reduce bandwidth overheads and improve effective bandwidth and communication performance while implementing flow control. The method includes: A first node generates a data packet. The data packet includes credit information of a second node, the credit information indicates a data volume quota returned to a virtual channel of the second node, and the virtual channel is used by the second node to transmit data to the first node. The first node sends the data packet to the second node. When receiving the data packet, the second node parses the data packet, to obtain the credit information of the second node. In this way, flow control on the first node is implemented based on the credit information.

## Description

This application claims priority to Chinese Patent Application No. 202310356421.7, filed with the China National Intellectual Property Administration on March 29, 2023 and entitled "FLOW CONTROL METHOD AND APPARATUS, AND SYSTEM", which is incorporated herein by reference in its entirety.

### TECHNICAL FIELD

This application relates to the field of communication technologies, and in particular, to a flow control method and apparatus, and a system.

### BACKGROUND

With growth of computing requirements and promotion of cloud services, the industry imposes more requirements on data centers. Services of the data centers require ultimate performance, and a core requirement is an ultra-low latency. However, currently, devices used in a data center are separated by various protocols, and communication between the devices needs to be converted according to the various protocols. Consequently, data processing flows and a latency are increased. Currently, communication between devices may be implemented according to a unified high-speed serial bus protocol, through which a protocol barrier of communication between the devices according to different protocols can be broken, and unnecessary intermediate conversion overheads are eliminated. This enables direct communication between a transmitter and a receiver of a service, to achieve an ultra-low latency.

The high-speed serial bus protocol usually includes a plurality of protocol layers. For example, the plurality of protocol layers may include a physical layer, a data link layer, a network layer, a transport layer, a transaction layer, and a function layer. When communication between the devices is implemented according to the high-speed serial bus protocol, how to implement flow control on the transmitter in a data transmission process and ensure that a buffer of the receiver does not overflow is a technical problem that urgently needs to be resolved.

### SUMMARY

This application provides a flow control method and apparatus, and a system, to reduce bandwidth overheads and improve effective bandwidth and communication performance while implementing flow control.

To achieve the foregoing objectives, the following technical solutions are used in embodiments of this application.

According to a first aspect, a flow control method is provided, and is applied to high-speed serial communication. The method includes: A first node generates a data packet. The data packet includes credit information of a second node. For example, the first node encapsulates the credit information of the second node and a first data packet at a link layer, to obtain the data packet (which may be referred to as a second data packet). The credit information indicates a data volume quota returned to a virtual channel of the second node, and the virtual channel is used by the second node to transmit data to the first node. The first node sends the data packet to the second node.

In the foregoing technical solution, when the first node has data that needs to be sent to the second node, the first node may generate the data packet and send the data packet to the second node. The data packet includes the credit information of the second node, and the credit information indicates the data volume quota returned to the virtual channel of the second node, so that the second node may obtain the credit information of the second node by parsing the data packet, and send the data to the first node based on the credit information. In this way, flow control on the first node is implemented. In comparison with sending a credit based on a control packet in a related technology, in this solution, bandwidth overheads can be reduced, and effective bandwidth and communication performance can be improved.

In a possible implementation of the first aspect, the credit information includes a credit identifier and a virtual channel identifier, the credit identifier indicates a data volume quota at a target granularity, and the virtual channel identifier indicates the virtual channel on which returning is performed. Alternatively, the credit information includes the returned data volume quota and the virtual channel identifier. In the foregoing possible implementation, the credit identifier indicates the data volume quota at the target granularity. This is simple and effective, and can reduce a length of the credit information, to reduce occupied bandwidth.

In a possible implementation of the first aspect, the target granularity is determined by the first node and the second node through negotiation. In the foregoing possible implementation, the first node and the second node may determine the target granularity of the returned data volume quota through negotiation, to determine different target granularities in different transmission requirements. This improves accuracy of determining the target granularity.

In a possible implementation of the first aspect, the data packet includes a packet header and a payload, the credit information is located in the packet header, and the payload is data transmitted to the second node. Optionally, the credit information is carried in information about a link packet header of the data packet, or the credit information is carried in information about a link block header of the data packet. In the foregoing possible implementation, the credit information is carried in the information about the link packet header or the information about the link block header of the data packet, to reduce bandwidth overheads, and improve effective bandwidth and communication performance.

In a possible implementation of the first aspect, the method further includes: The first node receives first indication information sent by the second node, where the first indication information indicates a first candidate granularity that is of the returned data volume quota and that is supported by the second node. The first node sends second indication information to the second node, where the second indication information indicates a second candidate granularity that is of the returned data volume quota and that is supported by the first node. The first node determines the target granularity based on the first candidate granularity, the second candidate granularity, and a preset rule. In the foregoing possible implementation, the first node and the second node may determine the target granularity of the returned data volume quota through negotiation, to determine different target granularities in different transmission requirements. This improves accuracy of determining the target granularity.

In a possible implementation of the first aspect, the method further includes: The first node receives first indication information sent by the second node, where the first indication information indicates a first candidate granularity that is of the returned data volume quota and that is supported by the second node. The first node sends third indication information to the second node based on the first candidate granularity and a second candidate granularity that is of the returned data volume quota and that is supported by the first node, where the third indication information indicates the target granularity. In the foregoing possible implementation, the first node and the second node may determine the target granularity of the returned data volume quota through negotiation, to determine different target granularities in different transmission requirements. This improves accuracy of determining the target granularity.

In a possible implementation of the first aspect, the target granularity is a minimum value in an intersection of the first candidate granularity and the second candidate granularity.

In a possible implementation of the first aspect, the method further includes: The first node sends a control packet to the second node, where the control packet carries the credit information. In the foregoing possible implementation, the first node may alternatively send the credit information of the second node to the second node by sending the control packet to the second node, to implement flow control on the first node.

In a possible implementation of the first aspect, the control packet is sent when the first node does not need to send the data packet to the second node. In the foregoing possible implementation, when the first node does not have a data packet that needs to be sent to the second node, the first node may send the credit information of the second node to the second node by sending the control packet to the second node, to implement flow control on the first node.

In a possible implementation of the first aspect, the control packet is sent when the first node needs to send a plurality of data packets to the second node, and the plurality of data packets cannot indicate a total data volume quota returned to the second node. In the foregoing possible implementation, when the first node has the plurality of data packets that need to be sent to the second node, and the plurality of data packets cannot indicate the total data volume quota returned to the second node, the first node may send the credit information of the second node to the second node by sending the control packet to the second node. In this way, flow control on the first node is implemented, and a rate at which the data volume quota is returned to the second node increases, to improve flow control efficiency.

In a possible implementation of the first aspect, the method further includes: The first node suspends sending of some of the plurality of data packets. In the foregoing possible implementation, when the plurality of data packets of the first node fully occupy bandwidth, the first node may perform backpressure on sending of the data packets, to forcibly send the control packet to send the credit information for the second node. In this way, flow control on the first node is implemented.

In a possible implementation of the first aspect, when the credit information is carried in the control packet, the control packet carries a plurality of pieces of credit information, and virtual channel identifiers in the plurality of pieces of credit information are different. In the foregoing possible implementation, the first node may send, to the second node based on the control packet, the plurality of pieces of credit information corresponding to different virtual channels. In this way, flow control on the first node is implemented, and the rate at which the data volume quota is returned to the second node increases, to improve flow control efficiency.

According to a second aspect, a flow control method is provided, and is applied to high-speed serial communication. The method includes: A second node receives a data packet from a first node, where the data packet may be a second data packet. The second node parses the data packet, to obtain credit information of the second node. For example, the second data packet is decapsulated at a link layer, to obtain the credit information of the second node and a first data packet. The credit information indicates a data volume quota returned to a virtual channel of the second node, and the virtual channel is used by the second node to transmit data to the first node.

In the foregoing technical solution, when the first node has data that needs to be sent to the second node, the first node may generate the data packet that includes the credit information of the second node, and send the data packet to the second node. The credit information indicates the data volume quota returned to the virtual channel of the second node, so that the second node may obtain the credit information of the second node by parsing the data packet, and send the data to the first node based on the credit information. In this way, flow control on the first node is implemented. In comparison with sending a credit based on a control packet in a related technology, in this solution, bandwidth overheads can be reduced, and effective bandwidth and communication performance can be improved.

In a possible implementation of the second aspect, the credit information includes a credit identifier and a virtual channel identifier, the credit identifier indicates a data volume quota at a target granularity, and the virtual channel identifier indicates the virtual channel on which returning is performed. Alternatively, the credit information includes the returned data volume quota and the virtual channel identifier. In the foregoing possible implementation, the credit identifier indicates the data volume quota at the target granularity. This is simple and effective, and can reduce a length of the credit information, to reduce occupied bandwidth.

In a possible implementation of the second aspect, the target granularity is determined by the first node and the second node through negotiation. In the foregoing possible implementation, the first node and the second node may determine the target granularity of the returned data volume quota through negotiation, to determine different target granularities in different transmission requirements. This improves accuracy of determining the target granularity.

In a possible implementation of the second aspect, the data packet includes a packet header and a payload, the credit information is located in the packet header, and the payload is data transmitted to the second node. Optionally, the credit information is carried in information about a link packet header of the data packet, or the credit information is carried in information about a link block header of the data packet. In the foregoing possible implementation, the credit information is carried in the information about the link packet header or the information about the link block header of the data packet, to reduce bandwidth overheads, and improve effective bandwidth and communication performance.

In a possible implementation of the second aspect, the method further includes: The second node sends first indication information to the first node, where the first indication information indicates a first candidate granularity that is of the returned data volume quota and that is supported by the second node. The second node receives second indication information from the first node, where the second indication information indicates a second candidate granularity that is of the returned data volume quota and that is supported by the first node. The second node determines the target granularity based on the first candidate granularity, the second candidate granularity, and a preset rule. In the foregoing possible implementation, the first node and the second node may determine the target granularity of the returned data volume quota through negotiation, to determine different target granularities in different transmission requirements. This improves accuracy of determining the target granularity.

In a possible implementation of the second aspect, the method further includes: The second node sends first indication information to the first node, where the first indication information indicates a first candidate granularity that is of the returned data volume quota and that is supported by the second node. The second node receives third indication information from the first node, where the third indication information indicates the target granularity, and the target granularity is determined by the first node based on the first candidate granularity and a second candidate granularity that is of the returned data volume quota and that is supported by the first node. In the foregoing possible implementation, the first node and the second node may determine the target granularity of the returned data volume quota through negotiation, to determine different target granularities in different transmission requirements. This improves accuracy of determining the target granularity.

In a possible implementation of the second aspect, the target granularity is a minimum value in an intersection of the first candidate granularity and the second candidate granularity.

In a possible implementation of the second aspect, the method further includes: The second node receives a control packet from the first node, where the control packet carries the credit information. In the foregoing possible implementation, the first node may alternatively send the credit information of the second node to the second node by sending the control packet to the second node, to implement flow control on the first node.

In a possible implementation of the second aspect, the control packet is sent when the first node does not need to send the data packet to the second node. In the foregoing possible implementation, when the first node does not have a data packet that needs to be sent to the second node, the first node may send the credit information of the second node to the second node by sending the control packet to the second node, to implement flow control on the first node.

In a possible implementation of the second aspect, the control packet is sent when the first node needs to send a plurality of data packets to the second node, and the plurality of data packets cannot indicate a total data volume quota returned to the second node. In the foregoing possible implementation, when the first node has the plurality of data packets that need to be sent to the second node, and the plurality of data packets cannot indicate the total data volume quota returned to the second node, the first node may send the credit information of the second node to the second node by sending the control packet to the second node. In this way, flow control on the first node is implemented, and a rate at which the data volume quota is returned to the second node increases, to improve flow control efficiency.

In a possible implementation of the second aspect, when the credit information is carried in the control packet, the control packet carries a plurality of pieces of credit information, and virtual channel identifiers in the plurality of pieces of credit information are different. In the foregoing possible implementation, the first node may send, to the second node based on the control packet, the plurality of pieces of credit information corresponding to different virtual channels. In this way, flow control on the first node is implemented, and the rate at which the data volume quota is returned to the second node increases, to improve flow control efficiency.

According to a third aspect, a flow control apparatus is provided, and is used in high-speed serial communication. The apparatus includes: a processing unit, configured to generate a data packet, where the data packet includes credit information of a second node, the credit information indicates a data volume quota returned to a virtual channel of the second node, and the virtual channel is used by the second node to transmit data to the apparatus; and a sending unit, configured to send the data packet to the second node.

In a possible implementation of the third aspect, the credit information includes a credit identifier and a virtual channel identifier, the credit identifier indicates a data volume quota at a target granularity, and the virtual channel identifier indicates the virtual channel.

In a possible implementation of the third aspect, the target granularity is determined by the apparatus and the second node through negotiation.

In a possible implementation of the third aspect, the data packet includes a packet header and a payload, the credit information is located in the packet header, and the payload is data transmitted to the second node. Optionally, the credit information is carried in information about a link packet header of the data packet, or the credit information is carried in information about a link block header of the data packet.

In a possible implementation of the third aspect, the apparatus further includes a receiving unit. The receiving unit is configured to receive first indication information sent by the second node, where the first indication information indicates a first candidate granularity that is of the returned data volume quota and that is supported by the second node. The sending unit is further configured to send second indication information to the second node, where the second indication information indicates a second candidate granularity that is of the returned data volume quota and that is supported by the apparatus. The processing unit is further configured to determine the target granularity based on the first candidate granularity, the second candidate granularity, and a preset rule.

In a possible implementation of the third aspect, the apparatus further includes a receiving unit. The receiving unit is configured to receive first indication information sent by the second node, where the first indication information indicates a first candidate granularity that is of the returned data volume quota and that is supported by the second node. The sending unit is further configured to send third indication information to the second node based on the first candidate granularity and a second candidate granularity that is of the returned data volume quota and that is supported by the apparatus, where the third indication information indicates the target granularity.

In a possible implementation of the third aspect, the target granularity is a minimum value in an intersection of the first candidate granularity and the second candidate granularity.

In a possible implementation of the third aspect, the sending unit is further configured to send a control packet to the second node, where the control packet carries the credit information. The control packet is sent when the data packet does not need to be sent to the second node; or the control packet is sent when a plurality of data packets need to be sent to the second node, and the plurality of data packets cannot indicate a total data volume quota returned to the second node.

In a possible implementation of the third aspect, the processing unit is further configured to suspend sending of some of the plurality of data packets.

In a possible implementation of the third aspect, when the credit information is carried in the control packet, the control packet carries a plurality of pieces of credit information, and virtual channel identifiers in the plurality of pieces of credit information are different.

According to a fourth aspect, a flow control apparatus is provided, and is used in high-speed serial communication. The apparatus includes: a receiving unit, configured to receive a data packet from a first node; and a processing unit, configured to parse the data packet, to obtain credit information of the apparatus, where the credit information indicates a data volume quota that is returned to a virtual channel of the second node, and the virtual channel is used by the apparatus to transmit data to the first node.

In a possible implementation of the fourth aspect, the credit information includes a credit identifier and a virtual channel identifier, the credit identifier indicates a data volume quota at a target granularity, and the virtual channel identifier indicates the virtual channel.

In a possible implementation of the fourth aspect, the target granularity is determined by the first node and the apparatus through negotiation.

In a possible implementation of the fourth aspect, the data packet includes a packet header and a payload, the credit information is located in the packet header, and the payload is data transmitted to the second node. Optionally, the credit information is carried in information about a link packet header of the data packet, or the credit information is carried in information about a link block header of the data packet.

In a possible implementation of the fourth aspect, the apparatus further includes a sending unit. The sending unit is configured to send first indication information to the first node, where the first indication information indicates a first candidate granularity that is of the returned data volume quota and that is supported by the second node. The receiving unit is further configured to receive second indication information from the first node, where the second indication information indicates a second candidate granularity that is of the returned data volume quota and that is supported by the first node. The processing unit is further configured to determine the target granularity based on the first candidate granularity, the second candidate granularity, and a preset rule.

In a possible implementation of the fourth aspect, the apparatus further includes a sending unit. The sending unit is configured to send first indication information to the first node, where the first indication information indicates a first candidate granularity that is of the returned data volume quota and that is supported by the second node. The receiving unit is further configured to receive third indication information from the first node, where the third indication information indicates the target granularity, and the target granularity is determined by the first node based on the first candidate granularity and a second candidate granularity that is of the returned data volume quota and that is supported by the first node.

In a possible implementation of the fourth aspect, the target granularity is a minimum value in an intersection of the first candidate granularity and the second candidate granularity.

In a possible implementation of the fourth aspect, the receiving unit is further configured to receive a control packet from the first node. The control packet carries the credit information, and the control packet is sent when the first node does not need to send the data packet; or the control packet is sent when the first node needs to send a plurality of data packets, and the plurality of data packets cannot indicate a returned total data volume quota.

In a possible implementation of the fourth aspect, when the credit information is carried in the control packet, the control packet carries a plurality of pieces of credit information, and virtual channel identifiers in the plurality of pieces of credit information are different.

According to a fifth aspect, a flow control apparatus is provided. The flow control apparatus includes a processor and a memory, the memory stores instructions, and when the processor runs the instructions, the apparatus is enabled to perform the flow control method in the first aspect or any one of the possible implementations of the first aspect.

According to a sixth aspect, a flow control apparatus is provided. The information transmission apparatus includes a processor and a memory, the memory stores instructions, and when the processor runs the instructions, the apparatus is enabled to perform the flow control method in the second aspect or any one of the possible implementations of the second aspect.

According to another aspect, this application provides a communication system. The communication system includes a first node and a second node. The first node includes the flow control apparatus in the third aspect or any one of the possible implementations of the third aspect, or the fifth aspect. The second node includes the flow control apparatus provided in the fourth aspect or any one of the possible implementations of the fourth aspect, or the sixth aspect.

According to another aspect, this application provides a computer-readable storage medium. The computer-readable storage medium stores a computer program or instructions, and when the computer program or the instructions is/are run, the method in the first aspect or any one of the possible implementations of the first aspect is implemented.

According to another aspect, this application provides a computer-readable storage medium. The computer-readable storage medium stores a computer program or instructions, and when the computer program or the instructions is/are run, the method in the second aspect or any one of the possible implementations of the second aspect is implemented.

According to another aspect, this application provides a computer program product. The computer program product includes a computer program (which may also be referred to as code or instructions), and when the computer program runs, a computer is enabled to perform the method in the first aspect or any one of the possible implementations of the first aspect.

According to another aspect, this application provides a computer program product. The computer program product includes a computer program (which may also be referred to as code or instructions), and when the computer program runs, a computer is enabled to perform the method in the second aspect or any one of the possible implementations of the second aspect.

It may be understood that any one of the foregoing apparatus, electronic device, computer-readable storage medium, and computer program product of the flow control method includes content of the flow control method provided above. Therefore, for beneficial effect that can be achieved by the apparatus, the electronic device, the computer-readable storage medium, and the computer program product, refer to beneficial effect of the flow control method provided above. Details are not described herein again.

### BRIEF DESCRIPTION OF DRAWINGS

FIG. 1 is a diagram of a structure of a communication system according to an embodiment of this application;
FIG. 2 is a diagram of flow control according to an embodiment of this application;
FIG. 3 is a schematic flowchart of a flow control method according to an embodiment of this application;
FIG. 4 is a schematic flowchart of another flow control method according to an embodiment of this application;
FIG. 5 is a diagram of a structure of a control packet according to an embodiment of this application;
FIG. 6 is a diagram of a structure of a first node according to an embodiment of this application;
FIG. 7 is a diagram of a structure of another first node according to an embodiment of this application;
FIG. 8 is a diagram of a structure of a second node according to an embodiment of this application; and
FIG. 9 is a diagram of a structure of another second node according to an embodiment of this application.

### DESCRIPTION OF EMBODIMENTS

The following describes technical solutions in embodiments of this application with reference to accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effect. A person skilled in the art may understand that the words such as "first" and "second" do not limit a quantity and an execution sequence. In addition, words such as "example" or "for example" are used to represent giving examples, illustrations, or descriptions. Any embodiment or design scheme described as "example" or "for example" in this application should not be explained as being more preferred or having more advantages than another embodiment or design scheme. Exactly, use of the word such as "example" or "for example" is intended to present a related concept in a specific manner.

The technical solutions provided in this application may be applied to a communication system. The communication system may be a chip-level system, namely, a communication system integrated on a chip. The communication system may include a plurality of nodes, the plurality of nodes may communicate with each other through a bus, and the communication may be implemented according to a high-speed serial bus transmission protocol. Optionally, the communication system may include a system like a data center, high-performance computing, or cloud computing. The node in the communication system may also be referred to as an endpoint (endpoint, EP). During actual application, the plurality of nodes may include but are not limited to a processing device, a storage device, an input/output device, and the like.

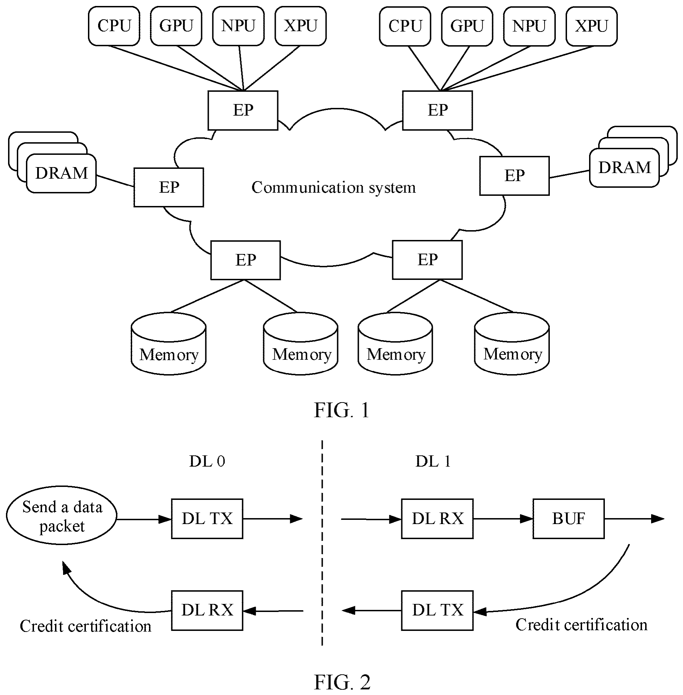

For example, as shown in FIG. 1, the communication system includes a plurality of nodes, and the plurality of nodes are connected through a bus. Communication may be performed between different nodes in the plurality of nodes. For example, data may be transmitted between any two nodes in the plurality of nodes, for example, data is transmitted through high-speed serial transmission. Each of the plurality of nodes may include one or more processors, or include one or more memories (memory). For example, the processor may include a central processing unit (central processing unit, CPU), a graphics processing unit (graphics processing unit, GPU), a network processing unit (network processing unit, GPU), and another processing unit (x processing unit, XPU). For another example, the memory may include an internal memory (which may be referred to as a memory for short) and an external storage (storage). Optionally, the internal memory may include a dynamic random access memory (dynamic random access memory, DRAM). The external storage may include a magnetic disk, a hard disk, a floppy disk, an optical disc, or the like.

In embodiments of this application, communication between devices in the communication system may be implemented according to a unified high-speed serial bus protocol, to break a protocol barrier in the conventional technology, and eliminate unnecessary intermediate conversion overheads. Therefore, the nodes in the communication system can directly communicate with each other, to achieve an ultra-low latency. Optionally, the unified high-speed serial bus protocol may include a peripheral component interconnect (peripheral component interconnect express, PCIe) protocol, a compute express link (compute express link, CXL) protocol, an Ethernet bus protocol, or the like.

The following describes the unified high-speed serial bus protocol. The unified high-speed serial bus protocol is an interface protocol that can be applied to a serializer/deserializer (serializer/deserializer, SerDes) of a chip, and may be used to implement peripheral extension, direct connection of processors, heterogeneous direct connection, network connection, memory extension, and the like in the communication system. A network of a unified protocol may be constructed for all devices in the communication system according to the unified high-speed serial bus protocol. In this way, same address code, same access timing, and the like may be used in different communication scenarios, so that flexible access in different communication scenarios is implemented, and complex protocol processing does not need to be performed.

The unified high-speed serial bus protocol may include a plurality of protocol layers. For example, the plurality of protocol layers may include a physical (physical, PHY) layer, a link (link) layer, a network (network) layer, a transport (transport) layer, a transaction (transaction) layer, and a function (function) layer. The physical layer is used to define a rule of physical connection in each scenario. The link layer may also be referred to as a data link (data link, DL) layer, and is used to define a point-to-point transmission mode in the protocol. The network layer is used to describe a network composition manner. The transport layer is used to define a network transmission mode. The transaction layer is used to define a transmission command and a consistency protocol. The function layer is used to provide a data processing capability. The layers in the protocol can be flexibly configured, and required protocol layers can be selected based on an actual situation in scenarios and applications.

When communication between the devices is implemented according to the unified bus protocol and the like, in a data transmission process at the link layer, flow control needs to be performed on a transmitter (that is, a node that sends data), to ensure that a buffer of a receiver (that is, a node that receives the data) in a service does not overflow. For example, a flow control mechanism is used to control a packet sending (send packet) rate of the transmitter, that is, a rate at which a data packet is sent.

For example, FIG. 2 shows a flow control mechanism based on a credit (credit) certification. In FIG. 2, for example, a link layer of a transmitter is a DL 0, a link layer of a receiver is a DL 1, and the DL 0 and the DL 1 each include a link layer transmit channel DL TX and a link layer receive channel DL RX. Specifically, during initialization, the receiver may allocate a credit to the transmitter, for example, allocate the credit to the transmitter based on an initializing flow control (initializing flow control, InitFC) packet. After obtaining sufficient credits, the transmitter may send a data packet to the receiver through the DL TX at the DL 0. The receiver may receive the data packet through the DL RX at the DL 1, and store the data packet in a buffer (buffer, BUF). The receiver may further return the credit to the transmitter through the DL TX at the DL 1, for example, return the credit to the transmitter based on an update flow control (update flow control, updateFC) packet. The transmitter may receive the credit through the DL RX at the DL 0, and the credit may be used to control a packet sending rate of the transmitter.

In a related technology, a receiver usually returns a credit to a transmitter based on a control packet at a link layer. However, high bandwidth overheads are caused by returning the credit to the transmitter based on the control packet, which affects effective bandwidth for communication between the transmitter and the receiver, and further affects communication performance.

In view of this, embodiments of this application provide a flow control method. In the method, credit information such as a credit may be encapsulated into a service packet at a link layer and sent, so that service data and the credit information are simultaneously sent based on the service packet. Therefore, in comparison with sending the credit based on the control packet in the related technology, in this solution, bandwidth overheads can be reduced. This further improves effective bandwidth and communication performance. The following describes the technical solutions provided in embodiments of this application.

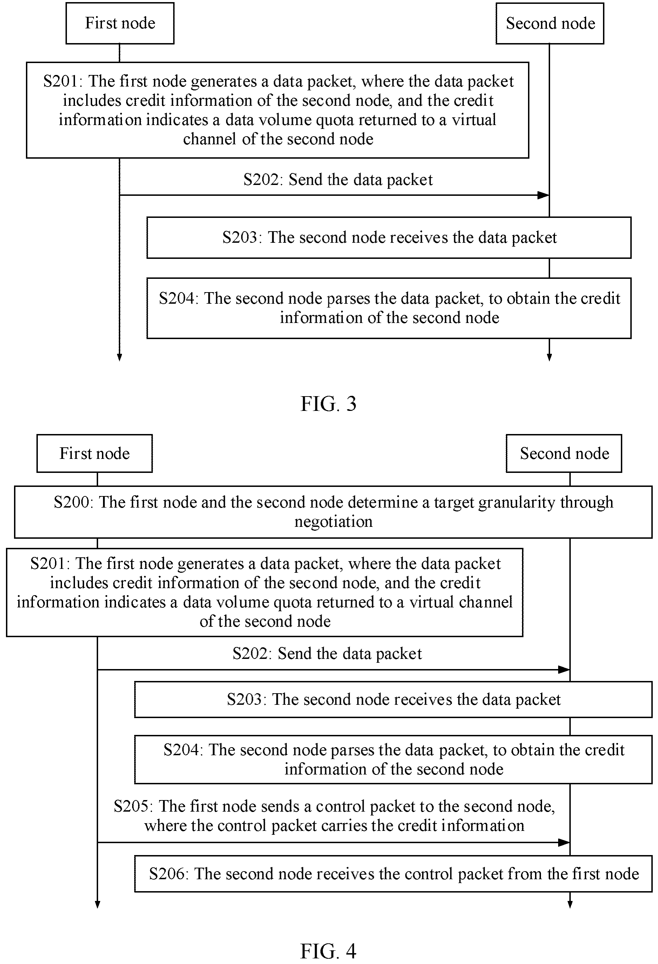

FIG. 3 is a schematic flowchart of a flow control method according to an embodiment of this application. The method may be applied to a communication system including a first node and a second node. The communication system may be the communication system provided above. The method may include the following several steps.

S201: The first node generates a data packet, where the data packet includes credit information of the second node.

The first node may be used as the foregoing receiver, and the second node may be used as the foregoing transmitter. In a process in which the second node transmits data to the first node, the first node may perform flow control on the second node in a credit allocation manner. Optionally, the first node may allocate an initial data volume quota to a virtual channel of the second node in an initialization phase, and the second node may transmit the data to the first node through the virtual channel based on the initial data volume quota (or by consuming the initial data volume quota). After receiving the data, the first node may return a corresponding data volume quota to the second node based on a usage status of a buffer used to store the data. In embodiments of this application, the data volume quota returned by the first node to the second node may be a data volume quota returned to the second node after the second node consumes the initial data volume quota.

The data volume quota returned by the first node to the virtual channel of the second node may also be referred to as a data volume quota reallocated by the first node to the virtual channel of the second node. The data volume quota may also be referred to as a credit quota, and may be specifically a data volume of data that is allowed to be sent.

In a possible embodiment, the data packet may be referred to as a second data packet, and that the first node generates the second data packet may specifically include: The first node encapsulates the credit information of the second node and a first data packet at a link layer, to obtain the second data packet. The data packet may be referred to as a service packet, that is, a packet used by the first node to transmit data to the second node. Correspondingly, the first data packet may also be referred to as a first service packet, and the second data packet may also be referred to as a second service packet.

The link layer may be a link layer corresponding to a unified serial bus protocol for communication between the first node and the second node. The first data packet may be a data packet that the first node needs to send to the second node, and the first data packet may be output by an upper protocol layer of the link layer. For example, the unified serial bus protocol is a PCIe protocol, the link layer may be a link layer corresponding to the PCIe protocol, and the first data packet may be a data packet output by a network layer corresponding to the PCIe protocol.

Optionally, the data packet includes a packet header (header) and a payload (load), the credit information is located in the packet header, and the payload is data transmitted to the second node. For example, the data packet is the second data packet. The credit information of the second node may be carried in information about a link packet header (link packet header) of the second data packet. Alternatively, the credit information of the second node may be carried in information about a link block header (link block header) of the second data packet.

The link layer may support transmitting, to a peer end at a granularity of a data packet (packet), a data packet transmitted by an upper layer. A minimum transmission unit at the link layer may be a flit, and 1 flit may be 20 bytes (bytes). A maximum length of the data packet transmitted at the link layer may be 512 flits. When a length of the data packet is greater than 32 flits, the data packet may be divided into a plurality of blocks (blocks) for segmented transmission. A length of each block may be 32 flits, and a last block may be used to transmit a remaining flit. The link packet header may be a header of the data packet transmitted at the link layer, and the link block header may be a block header of the block transmitted at the link layer.

Optionally, the credit information may include a first field, and the first field may indicate the returned data volume quota. In a possible example, the first field may indicate a specific data volume quota. For example, the first field includes a plurality of bits (bits), and the plurality of bits indicate the specific data volume quota. In another possible example, the first field is a credit identifier, and the credit identifier may indicate a data volume quota at a target granularity. For example, the credit identifier may be 1 bit. When a value of the 1 bit is 1, the 1 bit may indicate to return the data volume quota at the target granularity. When the value of the 1 bit is 0, the 1 bit may indicate not to return a credit. For example, the target granularity may be 128 cells, 64 cells, 32 cells, 16 cells, 8 cells, 4 cells, 2 cells, or 1 cell (cell), and a data volume quota indicated by the 1 cell may be fixed. This is not specifically limited in embodiments of this application.

In addition, the credit information further includes a second field, and the second field may indicate the virtual channel. For example, the second field is a virtual channel identifier (for example, the virtual channel identifier may be a virtual channel number), and the virtual channel identifier indicates the virtual channel corresponding to the credit identifier. A physical channel between the first node and the second node may include a plurality of virtual channels. For example, one physical channel includes 16 virtual channels. The second node may send data to the first node through at least one of the plurality of virtual channels, so that the first node may return, based on the data packet, a credit corresponding to any one of the at least one virtual channel.

For example, as shown in Table 1, a 0^{th} byte of the link packet header or the link block header may include 8 bits (bits), a 7^{th} bit may be a credit identifier CRD, a 2^{nd} bit to a 5^{th} bit may be a virtual channel identifier CRD_VL[3:0] corresponding to the credit identifier, and the other bits may be used to transmit other information. The other bits are not described in embodiments of this application.

**Table 1**

| Byte | Bits | Field name | Meaning |
|---|---|---|---|
| 0 | 7 | CRD | Indicating whether a credit is returned based on a packet |
| | ... | | |
| | 5 | CRD_VL[3:0] | Indicating a virtual channel number corresponding to the returned credit |
| | 4 | | |
| | 3 | | |
| | 2 | | |

It may be understood that the credit information shown in Table 1 is merely an example, and Table 1 does not constitute a limitation on embodiments of this application.

Further, when the credit identifier may indicate the data volume quota at the target granularity, the target granularity may be determined by the first node and the second node through negotiation. In other words, as shown in FIG. 4, the method may further include S200: The first node and the second node determine the target granularity through negotiation.

In a possible embodiment, a negotiation process of the first node and the second node may include: The second node sends first indication information to the first node, where the first indication information indicates a first candidate granularity that is of the returned data volume quota and that is supported by the second node. The first node sends second indication information to the second node, where the second indication information indicates a second candidate granularity that is of the returned data volume quota and that is supported by the first node. After receiving the first indication information, the first node may determine the target granularity based on the first candidate granularity, the second candidate granularity, and a preset rule. After receiving the second indication information, the second node may also determine the target granularity based on the first candidate granularity, the second candidate granularity, and the preset rule.

The preset rule may be set in advance. For example, the preset rule may be: using, as the target granularity, a minimum value, a second minimum value, a maximum value, a second maximum value, or the like in an intersection of the first candidate granularity and the second candidate granularity. During actual application, the preset rule only needs to ensure that the target granularity determined by the first node is consistent with the target granularity determined by the second node. Detailed content of the preset rule is not limited in embodiments of this application.

In another possible embodiment, a negotiation process of the first node and the second node may include: The second node sends first indication information to the first node, where the first indication information indicates a first candidate granularity that is of the returned data volume quota and that is supported by the second node. The first node sends third indication information to the second node based on the first candidate granularity and a second candidate granularity that is of the returned data volume quota and that is supported by the first node, where the third indication information indicates the target granularity.

Alternatively, a negotiation process of the first node and the second node may include: The first node sends second indication information to the second node, where the second indication information indicates a second candidate granularity that is of the returned data volume quota and that is supported by the first node. The second node sends fourth indication information to the first node based on the second candidate granularity and a first candidate granularity that is of the returned data volume quota and that is supported by the second node, where the fourth indication information indicates the target granularity.

Optionally, in the foregoing several different embodiments, the first candidate granularity and/or the second candidate granularity may specifically include at least one of the following granularities: 128 cells, 64 cells, 32 cells, 16 cells, 8 cells, 4 cells, 2 cells, or 1 cell (cell). In addition, information transmission in the foregoing negotiation process may be implemented based on a control packet.

S202: The first node sends the data packet to the second node.

S203: The second node receives the data packet from the first node.

It may be understood that specific descriptions of the data packet in S202 and S203 are consistent with the descriptions of the data packet in S201. For details, refer to the related descriptions in S201. Details are not described again in embodiments of this application.

In a possible embodiment, after the first node encapsulates the credit information of the second node and the first data packet at the link layer to obtain the second data packet, the second data packet may be transmitted from the link layer of the first node to a physical layer. Therefore, the first node may send the second data packet to the second node through the physical layer, to return the data volume quota at the target granularity to the second node based on the second data packet, that is, return the credit at the target granularity to the second node. When the first node sends the second data packet to the second node through the physical layer, the second node may receive the second data packet from the first node through a physical layer.

S204: The second node parses the data packet, to obtain the credit information of the second node.

When receiving the data packet, the second node may parse the packet header of the data packet, to obtain the credit information of the second node.

In a possible embodiment, if the data packet is the second data packet, when the second node receives the second data packet through the physical layer, the second data packet may be transmitted from the physical layer to a link layer. Therefore, the second data packet may be received at the link layer of the second node. The second node may decapsulate the second data packet at the link layer, to obtain the credit information of the second node and the first data packet. Then, the second node may send data to the first node based on the credit information, to implement flow control on the first node.

Optionally, the second node may parse the information about the link packet header of the second data packet, to obtain the credit information of the second node. Alternatively, the second node may parse the information about the link block header of the second data packet, to obtain the credit information of the second node.

Further, as shown in FIG. 4, the method further includes S205 and S206.

S205: The first node sends a control packet to the second node, where the control packet carries the credit information.

In a possible embodiment, the control packet is sent when the first node does not need to send the data packet to the second node. In other words, when the first node does not have a data packet that needs to be sent to the second node, the first node may send the credit information of the second node to the second node by sending the control packet to the second node.

In another possible embodiment, the control packet is sent when the first node needs to send a plurality of data packets to the second node, and the plurality of data packets cannot indicate a total data volume quota returned to the second node. In other words, when the first node has the plurality of data packets that need to be sent to the second node, and the plurality of data packets cannot indicate the total data volume quota returned to the second node, the first node may send the credit information of the second node to the second node by sending the control packet to the second node.

Bandwidth occupied for transmitting the plurality of data packets may be equal to effective bandwidth for communication between the first node and the second node. In other words, when the plurality of data packets of the first node occupy the entire bandwidth, and a sum of data volume quotas that can be indicated by the plurality of data packets is less than the total data volume quota returned to the second node, the first node may send the credit information of the second node to the second node based on the control packet. The sum of the data volume quotas that can be indicated by the plurality of data packets may be determined based on a product of a data volume quota indicated by each data packet and a quantity of data packets.

Optionally, when determining that the total data volume quota returned to the second node is greater than a preset quota, the first node may alternatively send the credit information of the second node to the second node based on the control packet. The preset quota may be set in advance. For example, the preset quota may be equal to the sum of the data volume quotas that can be indicated by the plurality of data packets.

In addition, when the plurality of data packets of the first node occupy the entire bandwidth, and the first node sends the credit information of the second node to the second node via the control packet, the first node may further suspend sending of some of the plurality of data packets. In other words, the first node may backpressure sending of the data packets, to forcibly send the control packet to send the credit information to the second node.

Further, when the credit information of the second node is carried in the control packet, there may be a plurality of pieces of credit information carried in the control packet, and virtual channel identifiers in the plurality of pieces of credit information are different. In other words, the plurality of pieces of credit information may correspond to different virtual channels.

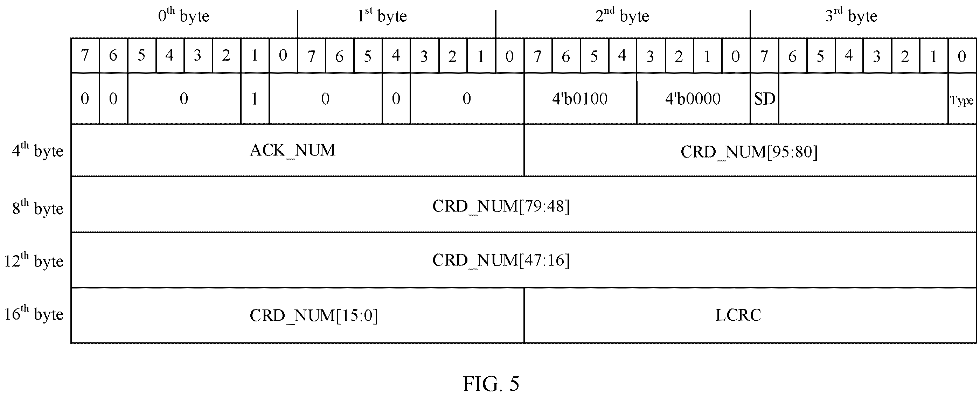

In a possible example, the control packet may carry credit information of 16 virtual channels. As shown in FIG. 5, it is assumed that the control packet includes 20 bytes: from a 0^{th} byte to a 10^{th} byte. The 0^{th} byte to a 2^{nd} byte are fixed values. In a 3^{rd} byte, a 7^{th} bit is an initializing credit send done (send done, SD) flag, and a 0^{th} bit is a type (type). A 4^{th} byte is ACK_NUM that indicates a quantity of released address spaces in the buffer. A 5^{th} byte to a 17^{th} byte indicate the credit information CRD_NUM of the 16 virtual channels, and the credit information are represented as CRD_NUM[95:80], CRD _NUM[79:48], CRD _NUM[47:16], and CRD_NUM[15:0] in the figure. An 18^{th} byte and a 19^{th} byte indicate a link cyclic redundancy check (link cyclic redundancy check, LCRC) code that may be used to check the 0^{th} byte to the 17^{th} byte.

S206: The second node receives the control packet from the first node, where the control packet carries the credit information.

When the first node does not have a data packet that needs to be sent to the second node, and sends the credit information of the second node to the second node based on the control packet, the second node may receive the control packet. In this way, the second node may send the data to the first node based on the credit information carried in the control packet, to implement flow control on the first node.

In embodiments of this application, when the first node has data that needs to be sent to the second node, the first node may generate the data packet and send the data packet to the second node. The data packet includes the credit information of the second node, and the credit information indicates the data volume quota returned to the virtual channel of the second node, so that the second node may obtain the credit information of the second node by parsing the data packet, and send the data to the first node based on the credit information. In this way, flow control on the first node is implemented. In comparison with sending a credit based on a control packet in a related technology, in this solution, bandwidth overheads can be reduced, and effective bandwidth and communication performance can be improved. Further, when the first node needs to send the plurality of data packets to the second node, and the plurality of data packets cannot indicate the total data volume quota returned to the second node, the first node may send the data volume quota to the second node based on the control packet. In this way, flow control on the first node is implemented, and a rate at which the data volume quota is returned to the second node increases, to improve flow control efficiency.

The solutions provided in embodiments of this application are mainly described above from a perspective of interaction between the first node and the second node. It may be understood that, to implement the foregoing functions, the first node and the second node include corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is executed by hardware or hardware driven by computer software depends on particular applications and design constraint conditions of the technical solutions. A person skilled in the art may use different methods to implement the described functions for each specific application. However, it should not be considered that the implementation goes beyond the scope of this application.

In the embodiments of this application, functional modules of the first node and the second node may be obtained through division based on the foregoing method examples. For example, the functional modules may be obtained through division corresponding to functions, or two or more functions may be integrated into one processing module. The functional module may be implemented in a form of hardware, or may be implemented in a form of a software functional module. It should be noted that, in embodiments of this application, division into the modules is an example, and is merely logical function division. During actual implementation, another division manner may be used. The following uses an example in which functional modules are obtained through division based on corresponding functions for description.

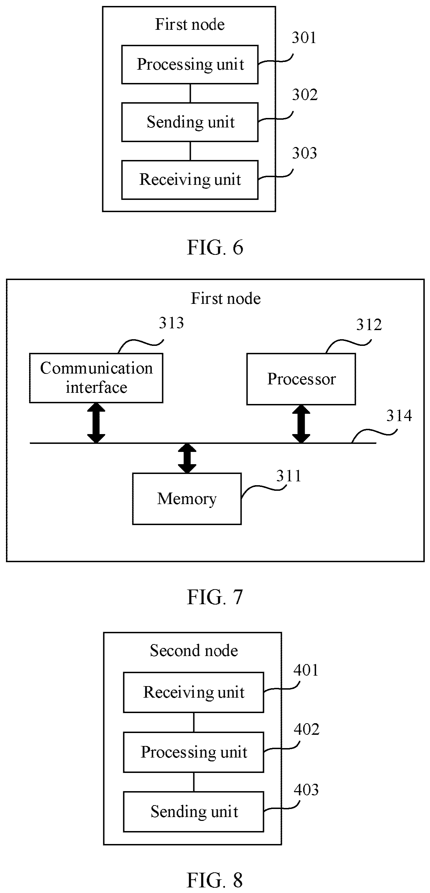

When an integrated unit is used, FIG. 6 is a diagram of a possible structure of a flow control apparatus in the foregoing embodiments. The apparatus may be a first node or a chip built in a first node. The apparatus includes a processing unit 301 and a sending unit 302. In a possible embodiment, the processing unit 301 may be configured to support the apparatus in performing one or more of step S201 in the foregoing method embodiments or the step of suspending sending of some of the plurality of data packets. The sending unit 302 may be configured to support the apparatus in performing at least one of step S202 or step S205 in the foregoing method embodiments, or support the apparatus in performing the step of sending the indication information in the negotiation process in the foregoing method embodiments. Further, the apparatus further includes a receiving unit 303. The receiving unit 303 may be configured to support the apparatus in performing the step of receiving the data sent by the second node in the foregoing method embodiments, or support the apparatus in performing the step of receiving the indication information in the negotiation process in the foregoing method embodiments.

All related content of each step involved in the foregoing method embodiments may be referenced to a function description of a corresponding functional module. Details are not described herein again.

When the apparatus is implemented by using hardware, the processing unit 301 may be a processor, the sending unit 302 may be a transmitter, and the receiving unit 303 may be a receiver. The receiver and the transmitter may be integrated into a transceiver, and the transceiver may also be referred to as a communication interface.

FIG. 7 is a diagram of a possible structure of a flow control apparatus according to an embodiment of this application. The flow control apparatus may be a first node or a chip built in a first node. The apparatus includes a memory 311 and a processor 312. The memory 311 is configured to store program code and data of the apparatus, and the processor 312 is configured to control an action of the first node in the foregoing method embodiments. For example, the processor 312 is configured to support the apparatus in performing S201 and suspending sending of some of the plurality of data packets in the foregoing method embodiments, and/or is configured to perform another process of the technology described in this specification. Optionally, the apparatus may further include a communication interface 313. The communication interface 313 is configured to support the apparatus in performing the step of communicating with the second node in the foregoing method embodiments.

The processor 312 may be a central processing unit, a general-purpose processor, a digital signal processor, an application-specific integrated circuit, a processing chip, a field programmable gate array or another programmable logic device, a transistor logic device, a hardware component, or any combination thereof. The processor may implement or execute various logical blocks, modules, and circuits described with reference to content disclosed in embodiments of this application. Alternatively, the processor 312 may be a combination of processors implementing a computing function, for example, a combination of one or more microprocessors, or a combination of a digital signal processor and a microprocessor. The communication interface 313 may be a transceiver, a transceiver circuit, a transceiver interface, or the like. The memory 311 may be a volatile memory, a non-volatile memory, or the like.

The communication interface 313, the processor 312, and the memory 311 are connected to each other through a bus 314. The bus 314 may be a peripheral component interconnect (Peripheral Component Interconnect, PCI) bus, an extended industry standard architecture (extended industry standard architecture, EISA) bus, or the like. The bus 314 may be classified into an address bus, a data bus, a control bus, and the like. For ease of indication, the bus is indicated by using only one bold line in the figure. However, it does not indicate that there is only one bus or only one type of bus.

Optionally, the memory 311 may be included in the processor 312.

When an integrated unit is used, FIG. 8 is a diagram of a possible structure of a flow control apparatus in the foregoing embodiments. The apparatus may be a second node or a chip built in a second node. The apparatus includes a receiving unit 401 and a processing unit 402. In a possible embodiment, the receiving unit 401 is configured to support the apparatus in performing one or more of step S203 or step S206 in the foregoing method embodiments, or support the apparatus in performing the step of receiving the indication information in the negotiation process in the foregoing method embodiments. The processing unit 402 may be configured to support the apparatus in performing S204 in the foregoing method embodiments. Further, the apparatus further includes a sending unit 403. The sending unit 403 is configured to support the apparatus in performing the step of sending the data sent to the first node in the foregoing method embodiments, or support the apparatus in performing the step of sending the indication information in the negotiation process in the foregoing method embodiments.

All related content of each step involved in the foregoing method embodiments may be referenced to a function description of a corresponding functional module. Details are not described herein again.

When the apparatus is implemented by using hardware, the processing unit 402 may be a processor, the receiving unit 401 may be a receiver, and the sending unit 403 may be a transmitter. The receiver and the transmitter may be integrated into a transceiver, and the transceiver may also be referred to as a communication interface.

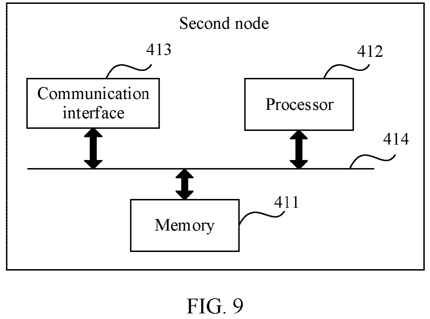

FIG. 9 is a diagram of a possible structure of a flow control apparatus according to an embodiment of this application. The apparatus may be a second node. The apparatus includes a memory 411 and a processor 412. The memory 411 is configured to store program code and data of the apparatus, and the processor 412 is configured to control an action of the second node in the foregoing method embodiments. For example, the processor 412 is configured to perform S204 in the foregoing method embodiments, and/or perform another process of the technology described in this specification. Optionally, the apparatus may further include a communication interface 413. The communication interface 413 is configured to support the apparatus in performing the step of communicating with the first node in the foregoing method embodiments.

The processor 412 may be a central processing unit, a general-purpose processor, a digital signal processor, an application-specific integrated circuit, a processing chip, a field programmable gate array or another programmable logic device, a transistor logic device, a hardware component, or any combination thereof. The processor may implement or execute various logical blocks, modules, and circuits described with reference to content disclosed in embodiments of this application. Alternatively, the processor 412 may be a combination of processors implementing a computing function, for example, a combination of one or more microprocessors, or a combination of a digital signal processor and a microprocessor. The communication interface 413 may be a transceiver, a transceiver circuit, a transceiver interface, or the like. The memory 411 may be a volatile memory, a non-volatile memory, or the like.

For example, the communication interface 413, the processor 412, and the memory 411 are connected to each other through a bus 414. The bus 414 may be a PCI bus, an EISA bus, or the like. The bus 414 may be classified into an address bus, a data bus, a control bus, and the like. For ease of indication, the bus is indicated by using only one bold line in the figure. However, it does not indicate that there is only one bus or only one type of bus.

Optionally, the memory 411 may be included in the processor 412.

According to another aspect of this application, a communication system is further provided. The communication system includes any first node provided above and any second node provided above. The first node is configured to perform the steps of the first node in the flow control method provided in the foregoing method embodiments. The second node is configured to perform the steps of the second node in the flow control method provided in the foregoing method embodiments.

All or some of the methods provided in embodiments of this application may be implemented by using software, hardware, or a combination thereof. When software is used for implementation, all or some of embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, a network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a twisted pair) or wireless (for example, infrared, or microwave) manner. The computer-readable storage medium may be any medium accessible by the computer, or a data storage device, such as a server or a data center, integrating one or more media. The medium may be a magnetic medium (for example, a floppy disk, a hard disk, or a magnetic tape), an optical medium (for example, an optical disc), a semiconductor medium (for example, a solid-state drive (SSD)), or the like.

According to another aspect of this application, a computer-readable storage medium is provided. The computer-readable storage medium includes computer instructions. When the computer instructions are run by a device, the device is enabled to perform the steps of the first node in the flow control method provided in the foregoing method embodiments.

According to another aspect of this application, a computer-readable storage medium is provided. The computer-readable storage medium includes computer instructions. When the computer instructions are run by a device, the device is enabled to perform the steps of the second node in the flow control method provided in the foregoing method embodiments.

According to another aspect of this application, a computer program product including instructions is provided. When the computer program product runs on a computer, the computer is enabled to perform the steps of the first node in the flow control method provided in the foregoing method embodiments.

According to another aspect of this application, a computer program product including instructions is provided. When the computer program product runs on a computer, the computer is enabled to perform the steps of the second node in the flow control method provided in the foregoing method embodiments.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A flow control method, applied to high-speed serial communication, wherein the method comprises:
generating, by a first node, a data packet, wherein the data packet comprises credit information of a second node, the credit information indicates a data volume quota returned to a virtual channel of the second node, and the virtual channel is used by the second node to transmit data to the first node; and
sending, by the first node, the data packet to the second node.

2. The method according to claim 1, wherein the credit information comprises a credit identifier and a virtual channel identifier, the credit identifier indicates a data volume quota at a target granularity, and the virtual channel identifier indicates the virtual channel.

3. The method according to claim 2, wherein the target granularity is determined by the first node and the second node through negotiation.

4. The method according to any one of claims 1 to 3, wherein the data packet comprises a packet header and a payload, the credit information is located in the packet header, and the payload is data transmitted to the second node.

5. The method according to claim 3 or 4, wherein the method further comprises:
receiving, by the first node, first indication information sent by the second node, wherein the first indication information indicates a first candidate granularity that is of the returned data volume quota and that is supported by the second node;
sending, by the first node, second indication information to the second node, wherein the second indication information indicates a second candidate granularity that is of the returned data volume quota and that is supported by the first node; and
determining, by the first node, the target granularity based on the first candidate granularity, the second candidate granularity, and a preset rule.

6. The method according to claim 3 or 4, wherein the method further comprises:
receiving, by the first node, first indication information sent by the second node, wherein the first indication information indicates a first candidate granularity that is of the returned data volume quota and that is supported by the second node; and
sending, by the first node, third indication information to the second node based on the first candidate granularity and a second candidate granularity that is of the returned data volume quota and that is supported by the first node, wherein the third indication information indicates the target granularity.

7. The method according to claim 5 or 6, wherein the target granularity is a minimum value in an intersection of the first candidate granularity and the second candidate granularity.

8. A flow control method, applied to high-speed serial communication, wherein the method comprises:
receiving, by a second node, a data packet from a first node; and
parsing, by the second node, the data packet, to obtain credit information of the second node, wherein the credit information indicates a data volume quota returned to a virtual channel of the second node, and the virtual channel is used by the second node to transmit data to the first node.

9. The method according to claim 8, wherein the credit information comprises a credit identifier and a virtual channel identifier, the credit identifier indicates a data volume quota at a target granularity, and the virtual channel identifier indicates the virtual channel.

10. The method according to claim 9, wherein the target granularity is determined by the first node and the second node through negotiation.

11. The method according to any one of claims 8 to 10, wherein the data packet comprises a packet header and a payload, the credit information is located in the packet header, and the payload is data transmitted to the second node.

12. The method according to claim 10 or 11, wherein the method further comprises:
sending, by the second node, first indication information to the first node, wherein the first indication information indicates a first candidate granularity that is of the returned data volume quota and that is supported by the second node;
receiving, by the second node, second indication information from the first node, wherein the second indication information indicates a second candidate granularity that is of the returned data volume quota and that is supported by the first node; and
determining, by the second node, the target granularity based on the first candidate granularity, the second candidate granularity, and a preset rule.

13. The method according to claim 10 or 11, wherein the method further comprises:
sending, by the second node, first indication information to the first node, wherein the first indication information indicates a first candidate granularity that is of the returned data volume quota and that is supported by the second node; and
receiving, by the second node, third indication information from the first node, wherein the third indication information indicates the target granularity, and the target granularity is determined by the first node based on the first candidate granularity and a second candidate granularity that is of the returned data volume quota and that is supported by the first node.

14. The method according to claim 12 or 13, wherein the target granularity is a minimum value in an intersection of the first candidate granularity and the second candidate granularity.

15. A flow control apparatus, applied to high-speed serial communication, wherein the apparatus comprises:
a processing unit, configured to generate a data packet, wherein the data packet comprises credit information of a second node, the credit information indicates a data volume quota returned to a virtual channel of the second node, and the virtual channel is used by the second node to transmit data to the apparatus; and
a sending unit, configured to send the data packet to the second node.

16. The apparatus according to claim 15, wherein the credit information comprises a credit identifier and a virtual channel identifier, the credit identifier indicates a data volume quota at a target granularity, and the virtual channel identifier indicates the virtual channel.

17. The apparatus according to claim 16, wherein the target granularity is determined by the apparatus and the second node through negotiation.

18. The apparatus according to any one of claims 15 to 17, wherein the data packet comprises a packet header and a payload, the credit information is located in the packet header, and the payload is data transmitted to the second node.

19. The apparatus according to claim 17 or 18, wherein the apparatus further comprises a receiving unit;
the receiving unit is configured to receive first indication information sent by the second node, wherein the first indication information indicates a first candidate granularity that is of the returned data volume quota and that is supported by the second node;
the sending unit is further configured to send second indication information to the second node, wherein the second indication information indicates a second candidate granularity that is of the returned data volume quota and that is supported by the apparatus; and
the processing unit is further configured to determine the target granularity based on the first candidate granularity, the second candidate granularity, and a preset rule.

20. The apparatus according to claim 17 or 18, wherein the apparatus further comprises a receiving unit;
the receiving unit is configured to receive first indication information sent by the second node, wherein the first indication information indicates a first candidate granularity that is of the returned data volume quota and that is supported by the second node; and
the sending unit is further configured to send third indication information to the second node based on the first candidate granularity and a second candidate granularity that is of the returned data volume quota and that is supported by the apparatus, wherein the third indication information indicates the target granularity.

21. The apparatus according to claim 19 or 20, wherein the target granularity is a minimum value in an intersection of the first candidate granularity and the second candidate granularity.

22. A flow control apparatus, applied to high-speed serial communication, wherein the apparatus comprises:
a receiving unit, configured to receive a data packet from a first node; and
a processing unit, configured to parse the data packet, to obtain credit information of the apparatus, wherein the credit information indicates a data volume quota returned to a virtual channel of the apparatus, and the virtual channel is used by the apparatus to transmit data to the first node.

23. The apparatus according to claim 22, wherein the credit information comprises a credit identifier and a virtual channel identifier, the credit identifier indicates a data volume quota at a target granularity, and the virtual channel identifier indicates the virtual channel.

24. The apparatus according to claim 23, wherein the target granularity is determined by the first node and the apparatus through negotiation.

25. The apparatus according to any one of claims 22 to 24, wherein the data packet comprises a packet header and a payload, the credit information is located in the packet header, and the payload is data transmitted to the apparatus.

26. The apparatus according to claim 24 or 25, wherein the apparatus further comprises a sending unit;
the sending unit is configured to send first indication information to the first node, wherein the first indication information indicates a first candidate granularity that is of the returned data volume quota and that is supported by the apparatus;
the receiving unit is further configured to receive second indication information from the first node, wherein the second indication information indicates a second candidate granularity that is of the returned data volume quota and that is supported by the first node; and
the processing unit is further configured to determine the target granularity based on the first candidate granularity, the second candidate granularity, and a preset rule.

27. The apparatus according to claim 24 or 25, wherein the apparatus further comprises a sending unit;
the sending unit is configured to send first indication information to the first node, wherein the first indication information indicates a first candidate granularity that is of the returned data volume quota and that is supported by the apparatus; and
the receiving unit is further configured to receive third indication information from the first node, wherein the third indication information indicates the target granularity, and the target granularity is determined by the first node based on the first candidate granularity and a second candidate granularity that is of the returned data volume quota and that is supported by the first node.

28. The apparatus according to claim 26 or 27, wherein the target granularity is a minimum value in an intersection of the first candidate granularity and the second candidate granularity.

29. A flow control apparatus, wherein the flow control apparatus comprises a processor and a memory, the memory stores instructions, and when the processor runs the instructions, the apparatus is enabled to perform the flow control method according to any one of claims 1 to 7.

30. A flow control apparatus, wherein the information transmission apparatus comprises a processor and a memory, the memory stores instructions, and when the processor runs the instructions, the apparatus is enabled to perform the flow control method according to any one of claims 8 to 14.

31. A communication system, wherein the communication system comprises a first node and a second node, the first node comprises the flow control apparatus according to any one of claims 15 to 21 or claim 29, and the second node comprises the flow control apparatus according to any one of claims 22 to 28 or claim 30.

32. A computer-readable storage medium, wherein the computer-readable storage medium stores instructions, and when the instructions are executed by a device, the device is enabled to perform the flow control method according to any one of claims 1 to 7.

33. A computer-readable storage medium, wherein the computer-readable storage medium stores instructions, and when the instructions are executed by a device, the device is enabled to perform the flow control method according to any one of claims 8 to 14.
